Europäisches Patentamt

European Patent Office

Office européen des brevets

(19)

(11) Publication number: **0 250 190 B1**

# EUROPEAN PATENT SPECIFICATION

(45) Date of publication of patent specification: **23.10.91**

(51) Int. Cl.⁵: **B65B 35/44**, B65G 21/14, B65G 47/51

(21) Application number: **87305284.9**

(22) Date of filing: **15.06.87**

(54) Improvements in or relating to apparatus for collating articles.

(30) Priority: **14.06.86 GB 8614543**

(43) Date of publication of application:
**23.12.87 Bulletin 87/52**

(45) Publication of the grant of the patent:
**23.10.91 Bulletin 91/43**

(84) Designated Contracting States:
**BE CH DE GB IT LI**

(56) References cited:
**DE-A- 2 821 898**
**FR-A- 2 529 180**
**US-A- 3 954 165**

(73) Proprietor: **APV CORPORATION LIMITED**
**Westfield Road**
**Peterborough PE3 6TA(GB)**

(72) Inventor: **Wiggins, Christopher Neville**
**11 St. Martin's**
**Castle Bytham Lincolnshire(GB)**
Inventor: **Smith, Peter James**
**42 Pinewood Close**
**Bourne Lincolnshire PE10 9RC(GB)**
Inventor: **Kirt, Gerard Malcom**
**14 st. Benedict's Close**
**Glinton, Peterborough PE6 7LJ(GB)**

(74) Representative: **Boutland, John Anthony et al**
**Barker, Brettell & Boutland Prudential Build-**
**ings 97-101 Above Bar Street**
**Southampton SO9 4GT(GB)**

## Description

This invention relates to apparatus for collating articles and is particularly, but not exclusively, concerned with collating substantially laminar articles such as tea bags, prior to packing them in containers.

FR-A-2-529-180 discloses apparatus for collating articles comprising an endless chain conveyor defining a plurality of article-receiving pockets and movable along an elongate path. The apparatus is provided with means (100) for feeding the articles into the pockets at an upstream region of the conveyor path. It further comprises means (sprocket 4) for imparting a driving force to the conveyor and means (intermittenly driven sprocket 5) for arresting movement of the conveyor locally, at a downstream region of the conveyor path, said means being remote from the where the conveyor driving force is imparted. The endless chain (8) of the conveyor is movable along a path of polygonal form (around four sprockets 3, 4, 3a and 5) and, when the means for arresting the movement of the conveyor are operated, the shape of the polygonal form is changed.

The present invention provides an improved apparatus for collating articles, comprising an endless chain conveyor defining a plurality of article-receiving pockets and movable along an elongate path, the apparatus being provided with means for feeding the articles into the pockets at an upstream region of the conveyor path, means for imparting a driving force to the conveyor, means operable to locally arrest movement of the conveyor at a downstream region of the conveyor path, said region being remote from where the conveyor driving force is imparted, and means for changing the shape of the conveyor path characterised in that the endless chain conveyor is movable along a path of rectangular form, guide sprockets are disposed at the four corners of the rectangular conveyor path, and restraint arms are disposed between the axes of pairs of sprockets, one end of each arm being pivotable about the axis of one sprocket of the pair with the other end connected to mounting structure supporting the other sprocket of the pair so that said other end can move about an arcuate path, whereby the means operates to arrest local movement of the conveyor and also causes a change in shape of the rectangular form of the conveyor path to one of trapezoidal form by pivotal movement of the restraint arms.

An embodiment of the invention will now be described by way of example only, with reference to the accompanying drawings, wherein :-

Figure 1 is a view in perspective of apparatus for collating tea bags, prior to packing them in containers,

Figure 2 is a view, to an enlarged scale, taken on the lines II - II of Figure 1,

Figure 3 is a side view of one of the fingers illustrated by Figure 2,

Figure 4 is a view looking in the direction of the arrow IV of Figure 3,

Figure 5 is an end view, in section, of a card-inserting device, for use when packing the tea bags, and

Figure 6 is a view in perspective of the device shown in Figure 5.

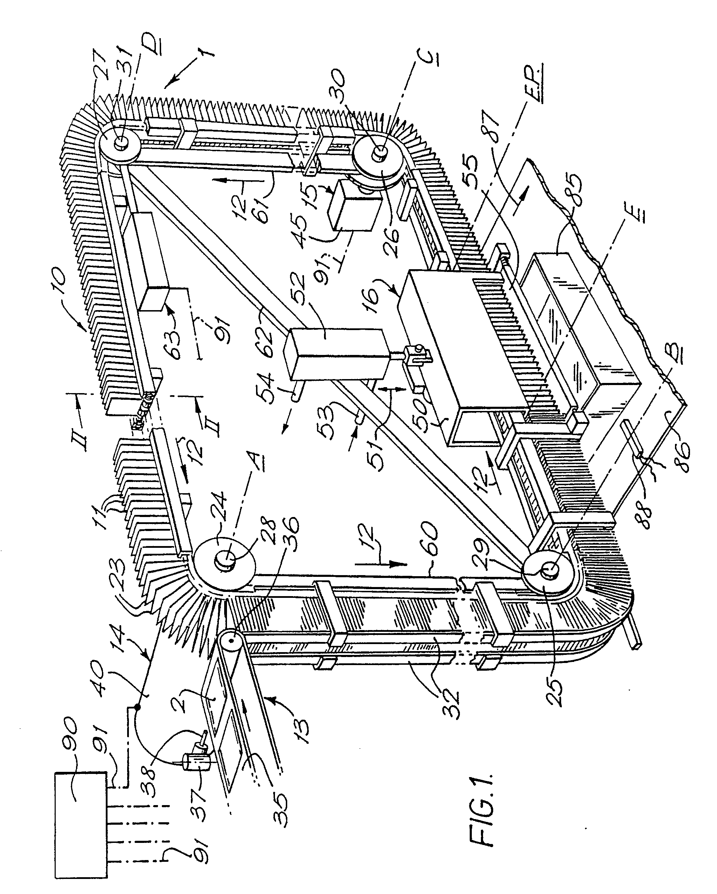

With reference first to Figure 1, apparatus 1 for collating limp, substantially laminar articles is illustrated thereby. The articles of this example comprise tea bags 2 and the apparatus 1 comprises part of a tea bag packaging plant incorporating the card-inserting device 3 of Figures 5 and 6.

The apparatus 1 comprises an endless conveyor 10 of chain-link form, and thus of flexible construction, which defines a plurality of tea bag-receiving pockets 11. The conveyor 10 is movable along an elongate (and endless) path of polygonal form, (in this example, a rectangle), indicated by arrows 12. The apparatus 1 is provided with means 13 for feeding the tea bags 2 into the pockets 11 at an upstream region of the conveyor path 12, means 14 for imparting a driving force to the conveyor 10, and means 15 for arresting movement of the conveyor at a downstream region of the path 12, said region being remote from wherein the conveyor driving force is imparted.

The apparatus 1 is also provided with means 16 for removing a batch of the tea bags from an arrested portion of the conveyor.

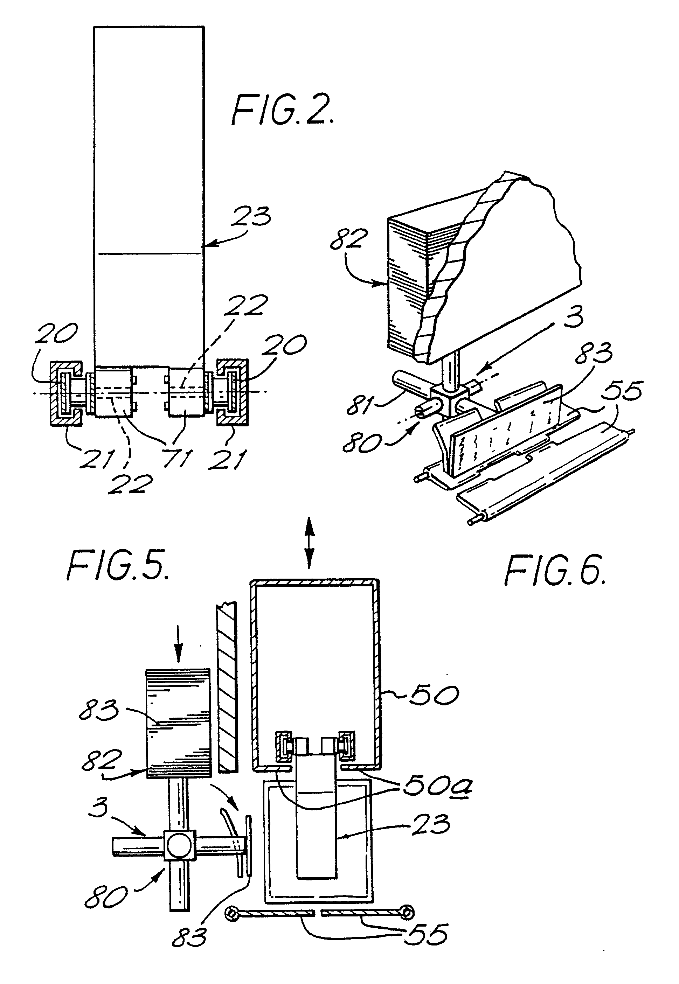

With additional reference to Figure 2, the conveyor 10 comprises "RENOLD" (Registered Trade Mark) twin chain links 20 movable in guides 21. The chain links 20 each have extended bearing pins 22 upon which are mounted fingers 23, pairs of which form the pockets 11. The chain circuit of the conveyor 10 is guided and supported by sprocket pairs 24, 25, 26, 27 mounted on parallel shafts 28, 29, 30, 31 respectively. The axes of the shafts 28-31 are disposed at the corners A, B, C, D of an imaginary rectangle substantially coextensive with the rectangular conveyor path 12. A, B, C and D can be regarded as stations along the conveyor path.

Laterally spaced guides 32 of "L"-shaped form wrap around that part of the conveyor 10 extending between station A and entry point E of the tea bag removal means 16.

The tea bag feeding means 13 comprise an endless band conveyor 35, the bights of which are movable around rollers 36, only one of which is shown. An optical sensor 37 disposed above the band of the conveyor 35 is used to sense the presence (or absence) of the tea bags 2 on the band. The optical sensor 37 also counts the tea bags being transported by the conveyor 35 and, in addition, detects the presence of "double", i.e. superimposed tea bags. Any such "doubles" are removed pneumatically from the conveyor 35 by a jet of air directed transversely to the path of travel of the conveyor 35 from a pipe 38, the air jet being actuated in response to a signal emitted by the sensor 37.

Sprockets 25 and 27 are freely rotatable about the axes of shafts 29 and 31.

The conveyor driving means 14 comprise an electric motor 40 which rotates the shaft 28 (and thus the sprockets 24) in a series of angular "steps", the steps being of equal magnitude.

The conveyor arresting means 15 comprise an electromagnetic brake 45 which, when operated, applies an arresting force to the otherwise freely rotatable shaft 30 and sprockets 26 mounted thereon.

The tea bag removing means 16 comprises a pusher member 50 of inverted "U" section, disposed substantially midway between conveyor stations B and C. The pusher member 50 is movable towards and away from the lower run of the conveyor 10, as indicated by arrow 51, by a pneumatically operated piston/cylinder unit 52 with an air inlet 53 and an exhaust 54 to atmosphere. Optionally, the means 16 may also comprise a pair of cooperating flap-like doors 55 (Figure 5) of rectangular form disposed side by side, and hinged about their outer edges. The doors 55 are (lightly) spring-loaded to their closed position. The pusher member 50 of inverted "U" section has flange-like, inwardly-extending, extremities 50a (Figure 5) which comprise the "working" faces of the pusher and which, in operation, engage on the upper edges of the tea bags during the discharge operation.

One end of a radial restraint arm 60 (Figure 1) is pivotally mounted to hinge about the axis of the shaft 28. The other end of the arm 60 is secured to the mounting structure (not shown) supporting the sprocket shaft 29, so that the shaft 29 (and sprockets 25) can move along an arcuate path, the centre of which coincides with the axis of the shaft 28. A similar restraint arm 61 has one end pivotally mounted to hinge about the axis of the shaft 30 and the other to the mounting structure (not shown), supporting the sprocket shaft 27.

A bracing member 62, the effective length of which is manually adjustable, (by means not shown), interconnects the mounting structures of the shafts 29 and 31 and also serves as a conveyor chain tensioner. A hydraulic piston/cylinder unit 63 is provided to re-establish the rectangular geometry of the conveyor path when the brake 45 is released.

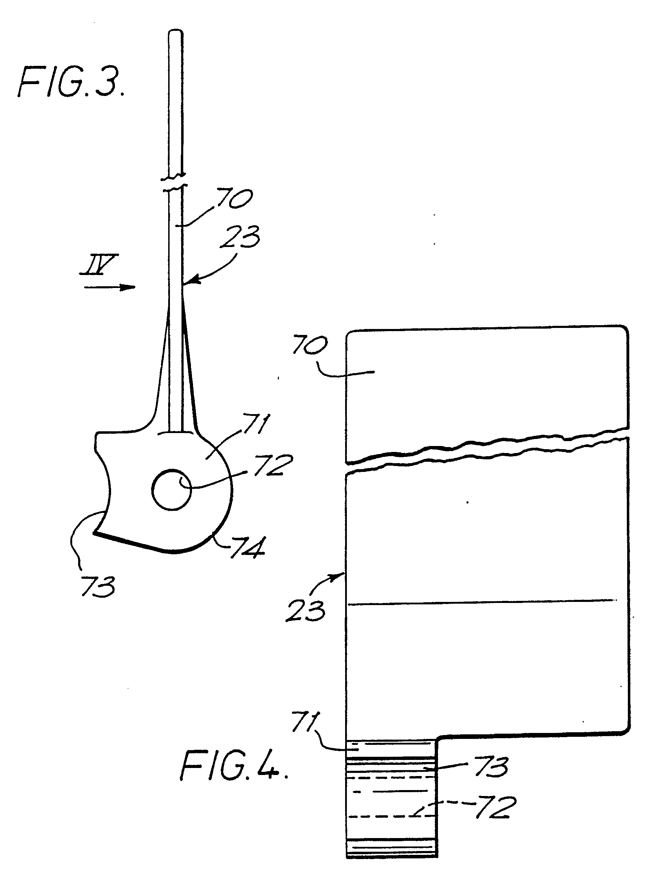

With reference to Figures 2, 3 and 4, the fingers 23 each comprise a substantially flat portion 70 and a support or bearing portion 71. An extended bearing pin 22 (Figure 2) of chain links 20 locates a central hole 72 of the support portion 71, and a concave surface 73 provides a seating for a convex surface 74 of an adjacent finger 23. The nesting concave and convex surfaces 73, 74 cooperate to allow relative (rotary) movement between adjacent fingers 23, about the link pins 22.

The spacing between adjacent fingers 23 defines a tea bag receiving pocket 11. The fingers 23 are of plastics material.

Referring now to Figures 5 and 6, the card-inserting device 3 comprises a rotary suction head 80 having four equi-spaced radially-extending arms 81, drive means (not shown), for rotating the head in 90° steps, and a magazine 82 for holding a supply of cards 83.

Referring once again to Figure 1, the apparatus 1 operates to fill tray-like cartons 85 with batches of tea bags 2 and also to insert a card 83 (Figure 5) in each carton. The cartons 85 are transported beneath the apparatus 1 by an endless conveyor band surface 86, as indicated by the arrow 87. A sensor 88 is provided to sense the presence (or absence) of a carton 85 on the conveyor surface 86.

In operation, as the conveyor 10 travels around its endless path 12 in a series of "steps", the pockets 11 defined by the fingers 23, open out as they move around the sprockets 24 at station A, so as to receive tea bags 2 fed into them by the conveyor 35, one tea bag per pocket. Movement of the conveyor 10 is controlled by a master controller 90 which incorporates a computer operated by a program. The controller 90 receives a signal from the sensor 37 that a tea bag is ready to be fed into a pocket 11. It then causes the motor 40 to rotate another "step", after a suitable time delay, so as to deposit the tea bag into a waiting pocket 11.

The sensor 37, having initially counted a predetermined number "X" of tea bags, which fill the pockets 11 from station A to entry point E of the tea bag removal means 16, does a secondary count say of value "Y", (number of tea bags in a batch), to be dispensed to the carton 85, which count is continually repeated.

During passage from station A to entry point E, the tea bags 2 are held in place, within the pockets 11, by the external guides 32, and thereafter for a short distance, by the spring-loaded doors 55, to exit point EP of the tea bag removing means 16.

When the tea bags 2 arrive at exit point EP, the brake means 15 is brought into operation so as to cause local arrest of conveyor movement. Simultaneously, the unit 52 of the removing means 16 is operated whereby the piston of the unit pushes the member 50 downwardly, forcing the lightly spring-loaded doors 55 (if employed) to open, so as to displace the batch of tea bags between points E and EP into the carton 85 waiting below.

During ejection of the tea bags 2 from the conveyor pockets 11, the brake means 15 continues to cause local arrest of the conveyor 10. Meanwhile, the motor 40 continues to operate, in order that tea bags can continue to be fed to the conveyor 10. This causes the conveyor chains to be pulled from station D, towards station A, shortening the distance between A and D. At the same time the distance between B and C increases. Imaginary lines between A and D, and between B and C remain parallel, but imaginary lines between A and B and between D and C now tend to converge. The result is a change in shape of the previously rectangular conveyor path which now takes the form of a trapezium, as only one pair of opposite sides remains parallel.

After displacement of a batch of tea bags into the carton 85, the member 50 is caused to return to its original position, by operation of the unit 52. On completion of its return "stroke", the member 50 actuates a microswitch, (not shown), whereby the brake means 15 is caused to release the shaft 30, and the unit 63 is caused to restore the conveyor path to its original (rectangular) path. Withdrawal of the member 50 also allows the spring-loaded doors 55 to close.

Meanwhile, the secondary count of tea bags by the sensor 37 has been continuing for subsequent discharge.

The conveyor 86 is caused to move on a short distance, in order that the same carton 85 may receive another batch of tea bags 2. When required, the card-inserting device 3 is operated whereby one of the arms 81 extracts, by suction, a card 83 from the magazine 82, the head 80 is rotated through 90° and the card 83 released from its pick-up arm 81 to be ejected with a batch of tea bags into the carton 85.

Operation of the conveyors 10, 35 and 86, also the means 3, 15 and 16, are all performed automatically according to a selected program, by the aforementioned master controller 90, and by way of control signal lines 91. Use of a microprocessor by the master controller 90 enables the apparatus 1 to achieve high operating speeds and flexibility.

Various modifications of the apparatus 1 are clearly possible. For example, the points of loading and discharge of the tea bags 2 to and from the conveyor 10 could be changed. Furthermore, two tea bag feeding means 13 could be used to charge the conveyor 10, if the latter is suitable modified.

**Claims**

1. Apparatus (1) for collating articles (2), comprising an endless chain conveyor (10) defining a plurality of article-receiving pockets (11) and movable along an elongate path (12), the apparatus (1) being provided with means (13) for feeding the articles (2) into the pockets (11) at an upstream region of the conveyor path, means (14) for imparting a driving force to the conveyor (10), means (15) operable to locally arrest movement of the conveyor at a downstream region of the conveyor path, said region being remote from where the conveyor driving force is imparted, and means (25) for changing the shape of the conveyor path (12), characterised in that the endless chain conveyor (10) is movable along a path (12) of rectangular form, guide sprockets (24, 25, 26, 27) are disposed at the four corners of the rectangular conveyor path (12), and restraint arms (60, 61) are disposed between the axes (28, 29 and 27, 30) of pairs of sprockets, one end of each arm (eg 60) being pivotable about the axis of one sprocket of the pair (eg 28) with the other end connected to mounting structure supporting the other sprocket (eg 25) of the pair so that said other end can move about an arcuate path, whereby the means (15) operates to arrest local movement of the conveyor (10) and also causes a change in shape of the rectangular form of the conveyor path (12) to one of trapezoidal form by pivotal movement of the restraint arms (60, 61).

2. Apparatus as claimed in claim 1, provided with pusher means (50) for removing a batch of articles (2) from an arrested portion of the conveyor (10), characterised in that the pusher means (50) operate against spring-loaded doors (55).

3. Apparatus as claimed in claim 2, further characterised in that the article-feeding means (13), the conveyor driving means (14), the conveyor arresting means (15) and the pusher means (50) are all operable by a programmable master control means (90).

**Revendications**

1. Appareil (1) pour rassembler des articles (2), comprenant un convoyeur à chaîne sans fin (10) définissant une pluralité de poches de réception d'articles (11) mobiles selon un trajet allongé (12), l'appareil (1) étant équipé de moyens (13) pour amener les articles (2) dans les poches (11) à une zone amont du trajet du convoyeur, des moyens (14) aptes à appliquer une force motrice au convoyeur (10), des moyens (15) susceptibles d'arrêter localement le déplacement du convoyeur dans une zone aval du trajet du convoyeur, cette zone étant éloignée de l'endroit où la force d'entraînement du convoyeur est appliquée, et des moyens (25) pour changer la forme du trajet (12) du convoyeur, caractérisé en ce que le convoyeur à chaîne sans fin (10) est susceptible de se déplacer le long d'un trajet (12) de forme rectangulaire, en ce que des pignons de chaîne de guidage (24, 25, 26, 27) sont disposés aux quatre coins du trajet de convoyeur rectangulaire (12), et en ce que des bras de retenue (60, 61) sont disposés entre les axes (28, 29 et 27, 30) des paires de pignons de chaîne, l'une des extrémités de chaque bras (par exemple 60) étant susceptible de pivoter autour de l'axe de l'un des pignons d'une paire (par exemple 28) tandis que son autre extrémité est connectée à une structure de montage supportant l'autre pignon (par exemple 25) de la paire de telle façon que ladite autre extrémité puisse se déplacer selon un trajet arqué, de telle façon que les moyens (15) fonctionnent pour arrêter le déplacement local du convoyeur (10) et provoquent ainsi un changement de la forme rectangulaire du trajet (12) du convoyeur pour le transformer en une forme trapézoïdale par déplacement articulé des bras de retenue (60, 61).

2. Appareil selon la revendication 1, équipé de moyens de poussage (50) pour enlever un lot d'articles (2) depuis une partie arrêtée du convoyeur (10), caractérisé en ce que les moyens de poussage (50) fonctionnent à l'encontre de portes (55) qui sont sollicitées élastiquement.

3. Appareil selon la revendication 2, caractérisé en ce que les moyens d'amenée d'articles (13), les moyens d'entraînement (14) du convoyeur, les moyens (15) d'arrêt de convoyeur et les moyens de poussage (50) sont tous susceptibles d'être commandés par des moyens de commande maîtres programmables (90).

## Patentansprüche

1. Apparat (1) zum Sammeln von Artikeln (2), enthaltend eine aus einer Endloskette bestehende Fördereinrichtung (10) mit einer Vielzahl Artikel-aufnehmender Taschen (11), wobei der Apparat (1) Mittel (13) aufweist zum Einführen der Artikel (2) in die Taschen (11) an einem stromaufwärts des Fördereinrichtungsweges gelegenen Bereich, ferner Mittel (14) enthält zur Übertragung einer Antriebskraft auf die Fördereinrichtung (10), des weiteren Mittel (15) aufweist zum örtlichen Anhalten der Fördereinrichtungsbewegung an einem stromabwärts des Fördereinrichtungsweges gelegenen Bereich, welcher von dem Bereich der Antriebskraftübertragung entfernt ist und Mittel (25) enthält zur Änderung der Form des Fördereinrichtungsweges (12),

**dadurch gekennzeichnet,**

- daß die aus einer Endloskette bestehende Fördereinrichtung (10) entlang eines eine rechteckige Form aufweisenden Weges (12) bewegbar ist,
- daß an den vier Ecken des rechteckigen Fördereinrichtungsweges (12) Führungskettenräder (24, 25, 26, 27) angeordnet und zwischen Achsen (28, 29 und 27, 30) von Kettenradpaaren Abstandshalterarme (60, 61) angeordnet sind,
- daß ein Ende eines jeden Armes (z.B. 60) schwenkbar ist um die Achse eines Kettenrades (z.B. 28) eines Paares und das andere Ende an (der) das andere Kettenrad (z.B. 25) des Paares haltenden Befestigungsstruktur befestigt ist, so daß das äußere Ende entlang eines gekrümmten Weges bewegbar ist, wobei die Mittel (15) den örtlichen Bewegungshalt der Fördereinrichtung (10) und auch eine Änderung der rechteckigen Form des Fördereinrichtungsweges (12) in eine trapezförmige Form durch eine Schwenkbewegung der Abstandshalterarme (60, 61) bewirken.

2. Apparat nach Anspruch 1, versehen mit einer Ausstoßeinrichtung (50) zum Entfernen einer abgeteilten Menge Artikel (2) aus einem angehaltenen Bereich der Fördereinrichtung (10), dadurch gekennzeichnet, daß die Ausstoßeinrichtung (50) entgegen federbelasteter Türen (55) arbeitet.

3. Apparat nach Anspruch 2, des weiteren dadurch gekennzeichnet, daß die Artikel-Einführungsmittel (13), die Fördereinrichtung-Antriebsmittel(14), die Fördereinrichtung-Anhaltemittel (15) und die Ausstoßeinrichtung (50) über eine programmierbare Hauptsteuereinrichtung (90) betätigbar sind.

FIG.1.

6

*FIG.2.*

*FIG.6.*

*FIG.5.*

FIG.3.

IV

70

23

71

72

74

73

70

23

71

73

72

FIG.4.